# EUROPEAN PATENT APPLICATION

(11) **EP 4 660 064 A1**
(43) Date of publication of application: **10.12.2025**
(21) Application number: 25178467.4
(22) Date of filing: 23.05.2025
(51) Int. Cl.: B62H 1/00, B62H 1/04, B62H 5/00

(54) **KICKSTAND**

(30) Priority: 07.06.2024 NL 2037893
(71) Applicant: Koninklijke Gazelle N.V., 6951 BP Dieren (NL)
(72) Inventor: KRAAIJVANGER, Herman Martheus, 6951 BP DIEREN (NL); KNITTEL, Sören, 6951 BP DIEREN (NL)
(74) Representative: De Vries & Metman

(57) **Abstract**

Kickstand (2) and bike comprising such a kickstand, in particular a longtail bike. The kickstand comprises:
- a housing (5);
- a pair of symmetrically arranged legs (3A, 3B) both having an hinging end (4A, 4B) rotatable relative to the housing between a parking position and a retracted position, and
- a transmission (7) transmitting rotation of one of said pair of legs (3A) Kickstand (2) comprising:
- a housing (5);
- a pair of symmetrically arranged legs (3A, 3B) both having an hinging end (4A, 4B) rotatable relative to the housing between a parking position and a retracted position, and
- a transmission (7) transmitting rotation of one of the legs (3A) to the other one. The transmission comprises a bar linkage connecting the two hinging ends (4A, 4B).

## Description

The present disclosure relates to a kickstand for a bike and to a bike comprising such a kickstand, in particular for a cargo bike, such as a longtail bike.

Cargo bikes include a cargo carrier, such as an open or enclosed box, or a flat platform, usually mounted over one or both wheels, low behind the front wheel, or between parallel wheels at either the front or rear of the vehicle. Longtail bikes are cargo bikes having a longer frame wheelbase at the rear compared to a standard bicycle. The extended rear facilitates use as a cargo bike, e.g., one or more passengers, in particular children.

A kickstand of a bike can be moved between a retracted position and a parking position supporting the parked bike to stand upright without additional support. Kickstands are usually biased to the retracted position by means of a spring positioned in such a way that the kickstand can be stabilized in the parking position by pulling it past a dead point.

While most bikes are usually provided with a single leg kickstand, cargo bikes such as longtail bikes typically comprise a center kickstand with a pair of legs, providing a more stable and robust parking position.

EP 2 236 396 Al discloses a bike having a kickstand with two legs that move towards each other when the kickstand is folded. This way, the legs do not hinder a user when riding the bike. The kickstand of EP 2 236 396 Al has a relatively compact top end making it less stable and robust.

It is an object of the invention to provide a kickstand, which is easy to use without having to use too much force, providing a more robust and safe parking position, in particular for longtail bikes.

The object of the invention is achieved with a kickstand comprising:
- a housing;
- a pair of symmetrically arranged legs both having an hinging end rotatable relative to the housing between a parking position and a retracted position, and
- a transmission transmitting rotation of one of the legs about a first axis of rotation to the other leg about a second axis of rotation. The transmission comprises a bar linkage connecting the two hinging ends. It was found that the use of such a bar linkage makes it possible to make a very robust and mechanically strong and safe kickstand.

The bar linkage can for example include a central link bar extending perpendicular to a plane of symmetry between the two legs.

In a specific embodiment, the central link bar is rotatably supported by a bracket, which is tiltable relative to the housing between a first position wherein the legs are in the parking position, and a second position, wherein the legs are in the retracted position.

The bracket can for example comprise a pair of arms, both arms having one end connected to a respective end of the central link bar, and an opposite end connected to a base of the bracket. In a specific embodiment, the arms can for example be L-shaped or have any other suitable shape.

Optionally, the kickstand comprises a biasing element, e.g., a tensile spring between the bracket and a part of the housing, the spring being tensioned to bias the bracket to the retracted position.

In a specific embodiment, both hinging ends comprise an axle stub having a radial arm extending radially relative to the rotational axis of the hinging end. The bar linkage comprises a first link bar connecting the radial arm of the axle stub of a first one of the pair of legs to the central link bar, and a second link bar connecting the radial arm of the axle stub of a second one of the pair of legs to the central link bar.

To provide additional freedom of movement during rotation of the legs, the first and second link bars can for example be connected to the respective axle stub by a spherical joint.

Optionally, the first and second link bars are both connected to the central link bar by a spherical joint. Such spherical joints of the central link bar can for example include a spherical surface or segment of the central link bar, and a circular eye at the outer end of the respective link bar, the circular eye receiving a respective one of the spherical surfaces or segments to form a sliding fit.

The kickstand can for example be provided with a lock to lock the legs in the parking position and/or in the retracted position. Such a lock can for example comprise one or more cams extending from at least one of the two axle stubs, and a locking plate with one or more openings for receiving a respective of the cams when the legs are in a parking or retracted position. In a specific embodiment, the locking plate can be moved by the action of a control element, e.g., a foot control element such as a pedal, between the locking position, wherein the cam of at least one of the axle stubs is received in the one or more openings so as to block rotation of the axle stubs, and a release position, allowing rotation of the axle stubs. Alternatively, the control element can be a hand control element, e.g., at the steer, e.g., using a Bowden cable.

The locking plate can for example be a bottom, e.g., bottom plate of the housing.

The kickstand of the present disclosure is particular suitable for a bike, such as a bicycle or tricycle, motor bike or cargo bike, in particular for a longtail bike.

The above-described aspects will hereafter be more explained with further details and benefits with reference to the drawings showing an exemplary embodiment.
Figure 1A: shows in perspective view an exemplary embodiment of a longtail bike with a folded kickstand;
Figure 1B: shows the kickstand of the longtail bike of Figure 1 with the kickstand in a parking position;
Figure 2A: shows the kickstand of Figure 1A in perspective view from a lower front side in the parking position;
Figure 2B: shows the kickstand of Figure 1A in perspective view from an upper front side in the parking position;
Figure 3A: shows the kickstand of Figure 1A in perspective view from an upper rear side in the parking position;
Figure 3B: shows the kickstand of Figure 1A in perspective view from an upper rear side in the retracted position;
Figure 4A: shows the transmission of the kickstand in the parking position;
Figure 4B: shows the transmission of the kickstand in the retracted position;
Figure 5: shows a cross section of the hinging end of one of the legs of the kickstand;
Figure 6: shows the lock and the legs of the kickstand in perspective view;

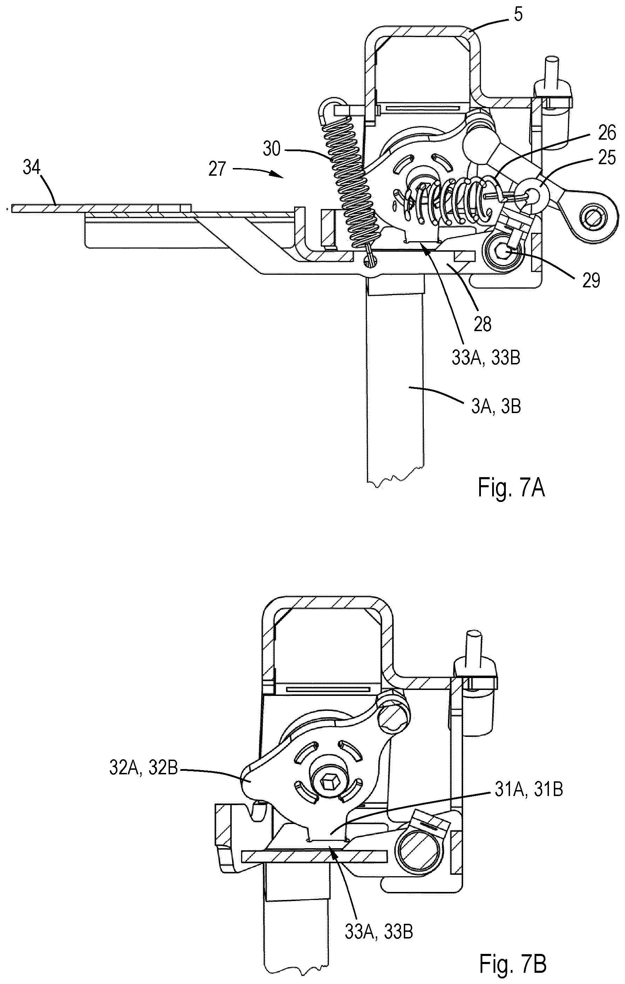

Figure 7A: shows the housing of the kickstand in a longitudinal cross section;
Figure 7B: shows a cross section parallel to the cross section in Figure 7A.

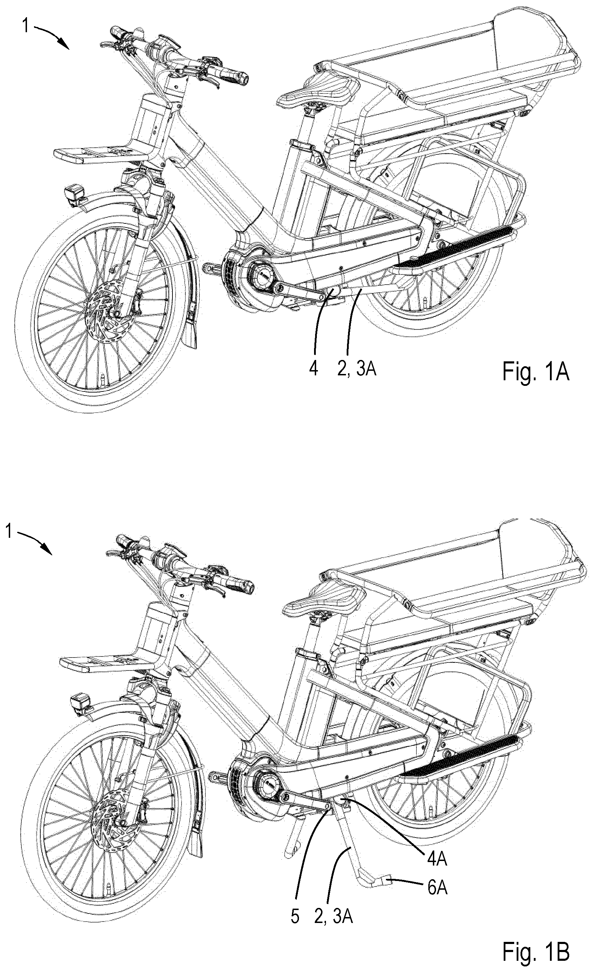

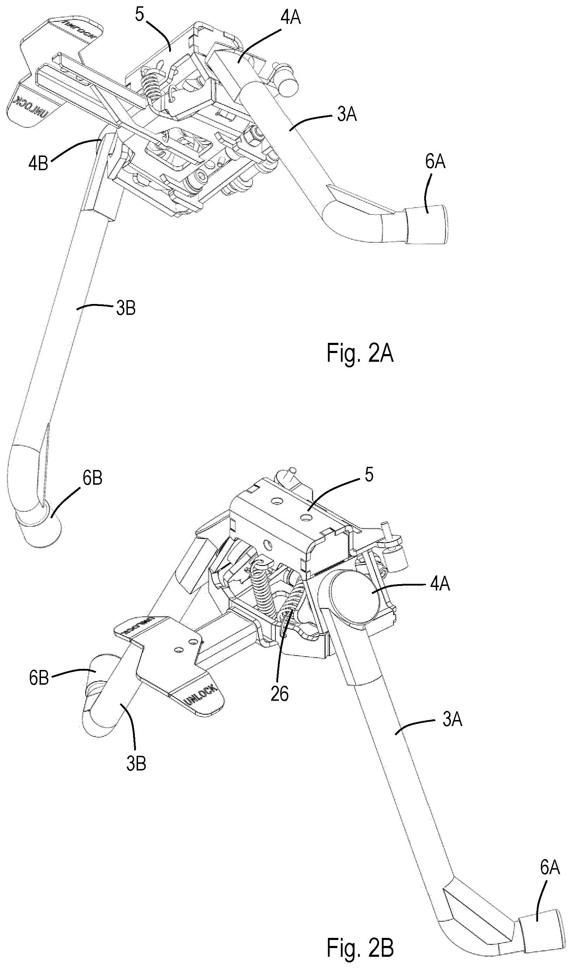

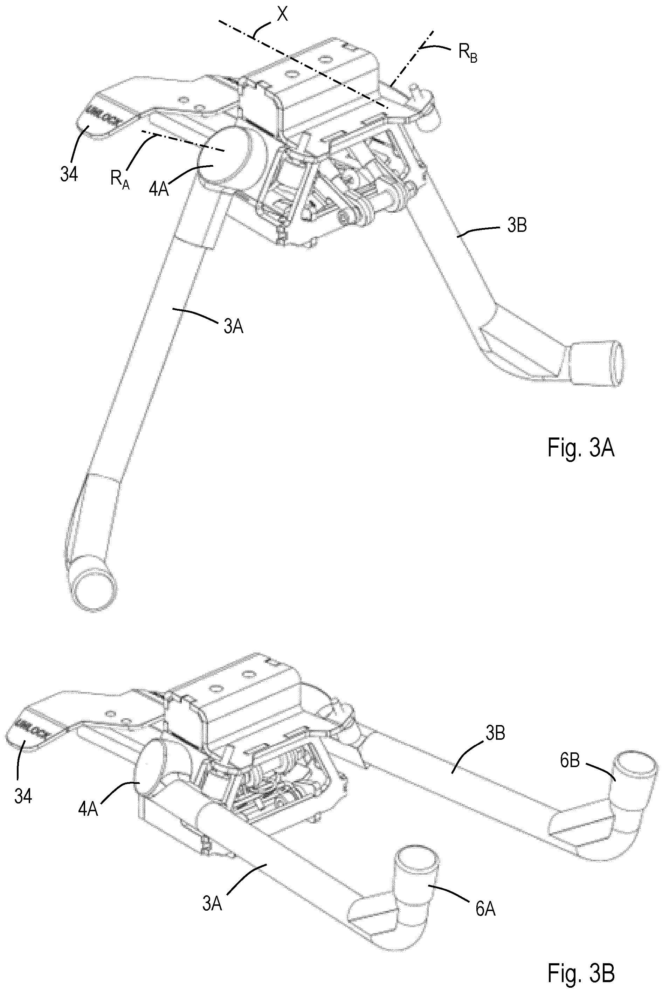

Figures 1A and 1B show an exemplary embodiment of a longtail bicycle 1 having a kickstand 2 with a pair of symmetrically shaped and arranged legs 3A, 3B which can jointly be rotated about a respective rotational axis between a retracted position, as shown in Figure 1A, and a parking position, as shown in Figure 1B. Since Figures 1A, B show the longtail bicycle from one side, only one of the legs 3A is visible in the drawing, the other leg 3B being symmetrically arranged at the opposite side of the longtail bicycle 1 and having the same size and shape. The kickstand 2 as a whole is shown separately in the parking position in Figures 2A, 2B and 3A, and in the retracted position in Figure 3B.

The kickstand is symmetrical and comprises a plane of symmetry through a longitudinal center plane of the bike 1. In the drawings, parts are numbered with the same number as their mirror parts, but with suffix A for parts on the left side (viewed in the direction of travel), or suffix B for the corresponding parts on the right side.

The two legs 3A, 3B have a hinging end 4A, 4B rotatably connected to a housing 5, and a foot end 6A, 6B opposite to the hinging end 4A, 4B. In the parking position, the foot ends 6A, 6B of the two legs 3A, 3B are at a greater mutual distance than when the two legs 3A, 3B are in the retracted position. In the parking position, in an upright position of the parked bicycle 1, the legs 3A, 3B define a reversed V-shape with the foot ends 6A, 6B spaced apart and pointing rearward. In the retracted position, the two legs 3A, 3B are parallel, or at least more parallel than in the parking position and the foot end 6A, 6B point upward. To achieve this, the legs 3A, 3B fold about respective rotational axes RA, RB which are symmetrically tilted downward towards the plane of symmetry through the kickstand 2 mirroring the two legs 3A, 3B. This central plane of symmetry is defined as the plane through a longitudinal axis X of the kickstand 2 and the point of intersection between the rotational axes RA, RB of the two legs 3.

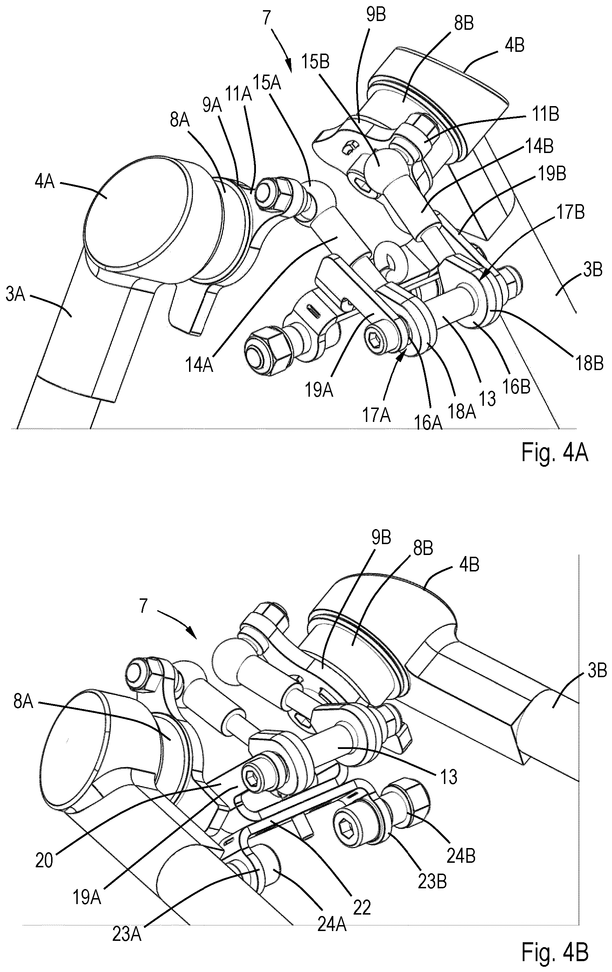

The two legs 3A, 3B of the kickstand 2 move jointly, symmetrically and simultaneously between the parking position and the retracted position. To this end, the housing 5 encases a transmission 7 synchronizing rotational movement of one leg 3A, 3B with rotational movement of the other leg 3A, 3B. The transmission 7 is shown in more detail in Figures 4A (parking position) and 4B (retracted position). For a clearer view, the housing 5 and other elements are not shown in these figures.

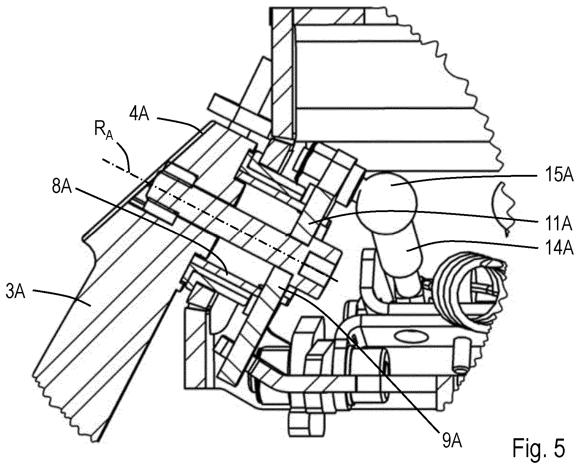

The hinging ends 4A, 4B of the two legs both 3A, 3B comprise an axle stub 9A, 9B extending through respective openings into the housing 5 having a bearing surface 8A, 8B to allow the rotational movement with respect to the respective opening in the housing 5. This is shown in more detail in Figure 5 in a cross section. Within the housing 5, a radial arm 11A, 11B extends from the respective axle stub 9A, 9B radially relative to the rotational axis RA, RB of the respective leg 3A, 3B.

The transmission 7 comprises a bar linkage, including:
- a central link bar 13, extending perpendicular to the central plane of symmetry,
- a first link bar 14A connecting a radial arm 11A of the axle stub 9A of a first one of the legs 3A to the central link bar 13, and
- a second link bar 14B connecting a radial arm 11B of the axle stub 9B of the other leg 3B to the central link bar 13.

The radial arms 11A, 11B of both axle stubs 9A, 9B are connected to the respective link bar 14A, 14B by means of a spherical joint 15A, 15B, in order to provide freedom of movement allowing rotation of the legs 3A, 3B about the respective rotational axis RA, RB.

The opposite ends of the two link bars 14A, 14B are connected to the central link bar 13 by means of spherical joints 16A, 16B. To this end, the central link bar 13 comprises two coaxial (partially) spherical seats 17A, 17B and the two link bars 14A, 14B comprise a circular eye 18A, 18B at their outer end receiving a respective one of the spherical seats 17A, 17B to form a sliding fit, allowing rotation about the central link bar 13 while also providing a certain degree of freedom of rotation about other rotational axes.

The outer ends of the central link bar 13 are connected to the outer ends of respective L-shaped arms 19A, 19B of a bracket 20 with a base 21 supporting the L-shaped arms 19A, 19B. The base 21 is mounted to a support 22 with bent outer ends 23A, 23B connected to the housing 5 by respective coaxial hinges 24A, 24B defining a titling axis of the bracket 20.

Accordingly, in Figures 3A and 3B, the hinging end 4A, 4B, and the hinges 24A, 24B have a fixed position relative to the housing 5, except for their hinging movement. The other parts are moved relative to the housing 5 when the legs 3A, 3B are rotated between the parking position and the folding position. When one of the legs 3A, 3B is moved by a user to rotate, the bar linkage transmission 7 transfers this movement to the other one of the legs 3A, 3B via the links 14A, 14B and the central link bar 13, which has a path of movement defined by the bracket 20 and the hinges 24A, 24B.

An eye 25 is mounted on top of the base plate 21 to connect to one end of a tensile spring 26 having an opposite end connected to the housing 5. Figure 4A shows the eye 25, but not the tensile spring 26. Figure 2B shows the end of the tensile spring 26 connected to the housing 5. In another embodiment, two tensile springs 26 and/or other biasing elements can be used in parallel. The spring or springs 26 bias the two legs 3A, 3B towards the retracted position via the transmission 7.

Moving the legs 3A, 3B from the parking position to the retracted position, the radial arms 11A, 11B of the linking ends 4A, 4B of the legs 3A, 3B pull the link bars 14A, 14B and the central link bar 13 into the housing 5, tilting the bracket 20 and relaxing the tensile spring or springs 26. Moving the legs 3A, 3B from the retracted position to the parking position, the radial arms 11A, 11B of the linking ends 4A, 4B push the link bars 14A, 14B and the central link bar 13 in a direction out of the housing 5, tilting back the bracket 20 against the action of the tensile spring or springs 26.

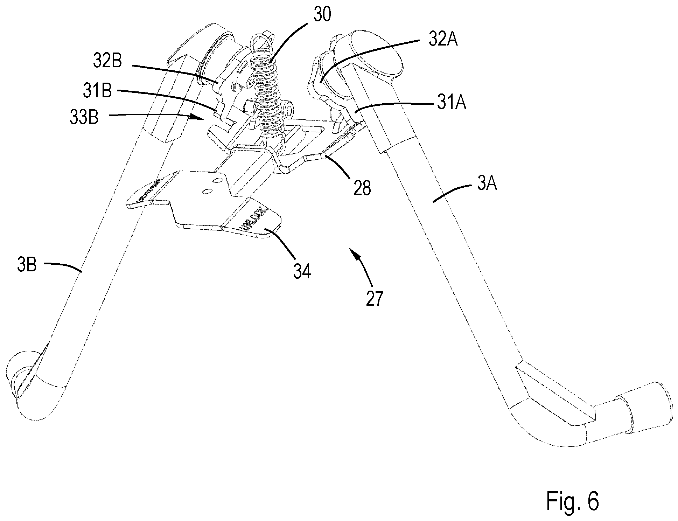

The kickstand 2 further comprises a lock 27 to lock the kickstand 2 in the parking position, or in the retracted position, respectively. The lock 27 is shown in particular in Figures 6A and 6B, showing parallel cross sections. The cross section of Figure 6B is offset from the center plane to provide a direct view to the axle stub 9A, 9B without the tensile springs 26, 30 and the bar linkage transmission 7. and comprises a tiltable locking plate 28. In the shown exemplary embodiment, the locking plate 28 is a bottom plate of the housing 5. The locking plate 28 can be tilted about a tilting axis 29 between a release potion and a locking position. In the shown embodiment, this tilting axis 29 coincides with the tilting axis of the bracket 20. A second biasing element 30, here embodied by a single tensile spring, connects the locking plate 28 to the top side of the housing 5 to bias the locking plate 28 to the locking position.

Both axle stubs 9A, 9B comprise a pair of cams 31A, 32A; 31B, 32B rotating with the respective axle stub 9A, 9B. A first one of the cams 31A, 31B is used to lock the legs 3A, 3B in the parking position. A second one of the cams 32A, 32B is used to lock the legs 3A, 3B in the retracted position.

The locking plate 28 has openings 33A, 33B for receiving a respective one of the cams 31A, 32A; 31B, 32B when the legs 3A, 3B are in the parking position or in the retracted position. The locking plate 28 can be moved by operating a control element 34, in this embodiment a foot control element or pedal.

In the parking position of the kickstand 2, when the lock 28 is in the locking position, the cam 31A of the respective axle stubs 9A is received in a respective one of the openings 33A in the locking plate 28, while the corresponding cam 31B of the other axle stub 9B is received in the opening 33B of the locking plate 28. This blocks rotation of the axle stubs 9A, 9B and the legs 3A, 3B.

When the foot control element 34 is pushed down, the locking plate 28 tilts down against the action of the tensile spring 30 and the cams 31A, 31B are released from the openings 33A, 33B. The tensile springs 26 pull and tilt the bracket 20 and rotate the legs 3A, 3B to the retracted position. In this position, the cams 32A, 32B are aligned with the openings 33A, 33B of the locking plate 28, and the tensile spring 30 will pull the locking plate 28 upward while the openings 33A, 33B in the locking plate 28 receive the cams 32A, 32B to stabilize the kickstand 2 in the retracted position.

To move the kickstand 2 from the retracted position to the parking position, a user can push down the legs 3A, 3B into the parking position. The cams 32A, 32B are chamfered or rounded, so they will slide out of the openings 33A, 33B of the locking plate 28. Consequently, there is no need for a user to actively push down the locking plate 28 to bring the kickstand 2 into the parking position.

When the legs 3A, 3B arrive at the parking position, the tensile spring 30 pulls the locking plate 28 upward while the openings 33A, 33B in the locking plate 28 receive the cams 31A, 31B to block further movement of the legs 3A, 3B. This locks the kickstand 2 in the parking position.

## Claims

1. Kickstand (2) comprising:
- a housing (5);
- a pair of symmetrically arranged legs (3A, 3B) both having an hinging end (4A, 4B) rotatable relative to the housing between a parking position and a retracted position, and
- a transmission (7) transmitting rotation of one of said pair of legs (3A) about a first axis of rotation (RA) to the other one of said pair of legs (3B) about a second axis of rotation (RB);
wherein the transmission comprises a bar linkage connecting the two hinging ends (4A, 4B).

2. Kickstand according to claim 1, wherein the bar linkage includes a central link bar (13) extending perpendicular to a plane of symmetry between the two legs.

3. Kickstand according to claim 2, wherein the central link bar is rotatably supported by a bracket (20), which is tiltable relative to the housing between a first position wherein the legs (3A, 3B) are in the parking position, and a second position, wherein the legs (3A, 3B) are in the retracted position.

4. Kickstand according to claim 3, wherein the bracket (20) comprises a pair of arms (19A, 19B), both arms having one end connected to a respective end of the central link bar (13), and an opposite end connected to a base (21).

5. Kickstand according to claim 3 or 4, further comprising a biasing element (26), e.g., a tensile spring or pair of springs between the bracket and a part of the housing, the spring or springs being tensioned to bias the bracket (20) towards the retracted position.

6. Kickstand according to any one of the preceding claims, wherein both hinging ends (4A, 4B) comprise an axle stub (9A, 9B) extending into the housing (5), the axle stub having a radial arm (11A, 11B) extending radially relative to the rotational axis (RA, RB) of the respective hinging end;
wherein the bar linkage comprises a first link bar (14A) connecting the radial arm (11A) of the axle stub (9A) of a first one of the pair of legs (3A, 3B) to the central link bar (13), and a second link bar (14B) connecting the radial arm (11B) of the axle stub (9B) of a second one of the pair of legs to the central link bar (13).

7. Kickstand according to claim 6, wherein the first and second link bars (14A, 14B) are connected to the respective axle stub (9A, 9B) by a spherical joint (15A, 15B).

8. Kickstand according to claim 6 or 7, wherein the first and second link bars (14A, 14B) are both connected to the central link bar (13) by a respective spherical joint (16A, 16B).

9. Kickstand according to claim 8, wherein both spherical joints (16A, 16B) of the central link bar (13) include a spherical seat (17A, 17B) of the central link bar, and a circular eye (18A, 18B) at the outer end of the respective link bar, the circular eye receiving a respective one of the spherical surfaces to form a sliding fit.

10. Kickstand according to any one of the preceding claims, further comprising lock (27) to lock the legs (3A, 3B) in the parking position and/or in the retracted position.

11. Kickstand according to claim 10, wherein the lock (27) comprises one or more cams (31A, 32A; 31B, 32B) extending from at least one of the two axle stubs (9A, 9B), and a locking plate (28) with one or more openings (33A, 33B) for receiving a respective of the cams when the legs (3A, 3B) are in a parking or retracted position.

12. Kickstand according to claim 11, wherein the locking plate (28) can be moved by operating a control element (34), e.g., a foot control element such as a pedal, between a locking position, wherein the cam (31A, 32A; 31B, 32B) of at least one of the axle stubs (9A, 9B) is received in the one or more openings (33A, 33B), and a release position, allowing rotation of the axle stubs.

13. Kickstand according to claim 11 or 12, wherein the locking plate (28) is a bottom plate of the housing (5).

14. Kickstand according to any one of preceding claims 11 - 13, comprising a second biasing element (30), such as a tensile spring, biasing the locking plate into a locking position.

15. Kickstand according to anyone of the preceding claims, wherein the rotational axes (RA, RB) are symmetrically tilted downward towards the plane of symmetry through the kickstand (2) mirroring the two legs (3A, 3B).

16. Bike (1), such as a cargo bike, e.g., a longtail bike, comprising a kickstand (2) according to any one of the preceding claims.
